# EUROPÄISCHE PATENTANMELDUNG

(11) **EP 4 806 253 A1**
(43) Veröffentlichungstag der Anmeldung: **16.09.2026**
(21) Anmeldenummer: 26156333.2
(22) Anmeldetag: 04.02.2026
(51) Int. Cl.: A01D 43/08

(54) **ÜBERLADEVORRICHTUNG, ERNTEMASCHINE UND BETRIEBSVERFAHREN DAFÜR**

(30) Priorität: 10.03.2025 DE 102025108922
(71) Anmelder: CLAAS Selbstfahrende Erntemaschinen GmbH, 33428 Harsewinkel (DE)
(72) Erfinder: Pauck, Jan, 33790 Halle/Westfalen (DE)
(74) Vertreter: CLAAS Gruppe

(57) **Zusammenfassung**

Eine Überladevorrichtung einer Erntemaschine (1) umfasst einem sich zwischen einem Einlass (5) und einem Auslass erstreckenden Auswurfkrümmer (6) und eine an dem Auslass angeordnete Gutleitklappe (7), deren Stellung relativ zum Auswurfkrümmer (6) steuerbar ist, um einen am Auslass des Auswurfkrümmers (6) austretenden Gutstrom (13) in eine gewünschte Richtung zu lenken. An einer am Auswurfkrümmer (6) stromaufwärts vom Auslass gelegenen Ausleitöffnung (10) ist eine Hilfsklappe (9) zwischen einer Normalstellung, in der sie den Gutstrom zum Auslass passieren lässt, und einer Überbrückungsstellung bewegbar, in der der Weg des Gutstroms zum Auslass versperrt ist und der Gutstrom an einer stromaufwärts vom Auslass gelegenen Ausleitstelle (10) aus dem Auswurfkrümmer (6) austritt.

## Beschreibung

Die vorliegende Erfindung betrifft eine Überladevorrichtung zum Überladen von Erntegut von einer Erntemaschine in einen Auffangbehälter, typischerweise einen Auffangbehälter eines Transportfahrzeugs, eine Erntemaschine mit einer solchen Überladevorrichtung und ein Betriebsverfahren für die Überladevorrichtung bzw. die Erntemaschine.

Aus EP 2 266 383 B1 ist eine Überladevorrichtung nach dem Oberbegriff des Anspruchs 1 bekannt. Diese Überladevorrichtung ermöglicht zum einen, während die Erntemaschine sich über eine landwirtschaftliche Nutzfläche bewegt und diese aberntet, das geborgene Erntegut laufend auf ein neben der Maschine herfahrendes Transportfahrzeug umzuladen, und zum anderen, wenn die Aufnahmekapazität des Transportfahrzeugs zu Ende geht, ein alternatives Transportfahrzeug in Stellung zu bringen und den Strom des Ernteguts auf das alternative Transportfahrzeug umzulenken, ohne dabei die Bewegung von Erntemaschine und Transportfahrzeugen bzw. den von der Erntemaschine ausgegebenen Strom des Ernteguts zu unterbrechen.

Während des Umschaltens des Erntegutstroms von einem Transportfahrzeug auf das andere müssen sich beide synchron mit der Erntemaschine bewegen und dabei einen Sicherheitsabstand einhalten. Wenn der Strom des Ernteguts in einer kontinuierlichen Bewegung der Gutleitklappe von einem Transportfahrzeug aufs andere umgeleitet wird, trifft er unvermeidlicherweise eine Zeitlang auch den Zwischenraum, so dass Erntegut auf die beerntete Fläche zurückfällt. Dies führt nicht nur zu Verlusten an Erntegut; Ernterückstände, die auf dem Feld liegenbleiben, führen auch zu Mindererträgen in durch Folgefrucht durch Minderaufgang sowie Wildschäden.

Aufgabe der Erfindung ist daher, Wege zur Vermeidung oder wenigstens Minimierung solcher Verluste aufzuzeigen.

Die Aufgabe wird einem Aspekt der Erfindung zufolge dadurch gelöst, dass bei einer Überladevorrichtung mit einem sich zwischen einem Einlass und einem Auslass erstreckenden Auswurfkrümmer und einer an dem Auslass angeordneten Gutleitklappe, deren Stellung relativ zum Auswurfkrümmer steuerbar ist, um einen am Auslass des Auswurfkrümmers austretenden Gutstrom in eine gewünschte Richtung zu lenken, eine am Auswurfkrümmer stromaufwärts vom Auslass gelegene Hilfsklappe zwischen einer Normalstellung, in der sie den Gutstrom zum Auslass passieren lässt, und einer Überbrückungsstellung bewegbar ist, in der der Weg des Gutstroms zum Auslass versperrt ist und der Gutstrom an einer stromaufwärts vom Auslass gelegenen Ausleitstelle aus dem Auswurfkrümmer austritt.

Wenn der Gutstrom zeitweilig über die Ausleitstelle austritt, kann die Gutleitklappe von einer Stellung, in der der von ihr ausgegebene Gutstrom einen ersten Auffangbehälter trifft, in eine Stellung versetzt werden, in der er einen vom ersten durch einen Sicherheitsabstand getrennten zweiten Auffangbehälter trifft, ohne dass zwischenzeitlich Gut verloren geht, weil es zwischen die Auffangbehälter fällt.

Die Gutleitklappe sollte in eine Ausgangsstellung steuerbar sein, in der die Wege eines bei in Normalstellung befindlicher Hilfsklappe am Auslass austretenden Gutstroms und eines Gutstroms, der bei in Überbrückungsstellung befindlicher Hilfsklappe an der Ausleitöffnung austritt, entfernt von dem Auslass und der Ausleitöffnung aufeinandertreffen. Wenn vor Beginn des Umschaltens vom ersten Auffangbehälter auf den zweiten die Gutleitklappe in der Ausgangsstellung ist und der Gutstrom in den ersten Behälter trifft, dann kann er dies während des Umschaltens über die Hilfsklappe weiterhin tun, und der Strom über die Gutleitklappe kann so lange unterbrochen bleiben, bis diese eine Zielstellung erreicht hat, in der ihr Gutstrom den zweiten Auffangbehälter trifft.

Um das Ausrichten von Gutleitklappe und Hilfsklappe auf denselben Auffangbehälter zu erleichtern, sollte der Abstand zwischen beiden nicht zu groß sein. Vorzugsweise ist daher der Abstand zwischen der Ausleitöffnung und dem Einlass wenigstens doppelt so groß wie der Abstand zwischen der Ausleitöffnung und dem Auslass.

Die Überladevorrichtung kann eine Steuereinheit zum Steuern der Stellungen von Gutleitklappe und Hilfsklappe umfassen. Die Steuereinheit kann die Umstellung der Gutleitklappe vom ersten auf den zweiten Auffangbehälter automatisch steuern, oder sie kann sich darauf beschränken, Fehlern vorzubeugen, die ein menschlicher Benutzer, typischerweise ein Fahrer einer mit der Überladevorrichtung ausgerüsteten Erntemaschine, beim Steuern dieser Umstellung machen könnte.

Vorzugsweise ist die Steuereinheit eingerichtet, einen Übergang der Hilfsklappe von der Normalstellung in die Überbrückungsstellung nur zuzulassen, wenn die Gutleitklappe sich in einem vorgegebenen Ausgangsstellungsbereich befindet. So kann sichergestellt werden, dass zum einen die Hilfsklappe, wenn sie in die Überbrückungsstellung versetzt wird, den Gutstrom in denselben Auffangbehälter lenken kann wie zuvor die Gutleitklappe, oder dass im Rahmen einer begrenzten Bewegungsfreiheit der Gutleitklappe diese tatsächlich weit genug verstellbar ist, um den Gutstrom tatsächlich in einen anderen Auffangbehälter zu lenken.

In dem Fall, dass die Gutleitklappe sich nicht in dem vorgegebenen Ausgangsstellungsbereich befindet, kann die Steuereinheit eingerichtet sein, ein Hinweissignal zu erzeugen. Das Hinweissignal kann automatisch an ein Transportfahrzeug weitergegeben werden, um es zu veranlassen, die Position des von ihm beförderten Transportbehälters zu korrigieren. Spätestens wenn dieser nahezu voll ist, sollte er so platziert sein, dass ein Überladen in ihn auch über die Hilfsklappe möglich ist, bzw. dass eine Stellung der Gutleitklappe existiert, in der sie den Gutstrom an einen Ort neben dem aktuellen Transportbehälter lenkt, an dem der nächste zu befüllende Transportbehälter platziert werden kann. Das Hinweissignal kann auch dem Fahrer der Erntemaschine angezeigt werden, um diesen darauf hinzuweisen, dass in der derzeitigen Position von Erntemaschine und Transportfahrzeug zueinander eine Umstellung der Gutleitklappe auf einen zweiten Auffangbehälter noch nicht möglich ist und der erste Auffangbehälter erst passend positioniert werden muss. Nicht zuletzt kann es dazu dienen, einen vom Fahrer eventuell trotz ungeeigneter Positionen von Erntemaschine und Transportfahrzeug erteilten Befehl zur Umstellung der Gutleitklappe zu unterdrücken.

Da der nächste zu befüllende Transportbehälter erst dann in Reichweite der Gutleitklappe platziert werden muss, wenn eine Umstellung auf diesen bevorsteht, und bis dahin das Navigieren einer Erntemaschine, die mit der Überladevorrichtung ausgestattet ist, und eines Transportfahrzeugs umso einfacher ist, je weniger Randbedingungen zu beachten sind, kann die Steuereinheit ferner eingerichtet sein, eine durch den Auswurfkrümmer geförderte Gutmenge zu überwachen und das Hinweissignal erst dann zu erzeugen, wenn die Gutmenge einen Schwellenwert erreicht hat.

Die Steuereinheit kann ferner eingerichtet sein, die Position eines aktiven Auffangbehälters relativ zum Auswurfkrümmer zu ermitteln und die Stellung der Gutleitklappe der ermittelten Position nachzuführen. Zu diesem Zweck kann sie mit Umgebungssensoren verbunden sein, die es erlauben, die Position des Auffangbehälters zu messen; denkbar ist aber auch, dass Erntemaschine und Transportfahrzeug jeweils mit satellitengestützten Ortungssystemen ausgestattet sind und die Steuereinheit die Position des Auffangbehälters relativ zum Auswurfkrümmer anhand eines Vergleichs von von diesen Ortungssystemen ermittelten Positionen abschätzt.

Um Erntegutverluste zu vermeiden, kann die Steuereinheit außerdem eingerichtet ein, zu erfassen, ob sich ein alternativer Auffangbehälter an einer Position befindet, die für den Gutstrom erreichbar ist, wenn die Gutleitklappe sich in einer Zielstellung befindet, und den Übergang der Hilfsklappe von der Normalstellung in die Überbrückungsstellung nur zuzulassen, wenn erfasst wird, dass der alternative Auffangbehälter sich an der Position befindet und folglich die Umstellung erfolgreich durchgeführt werden kann. Auch diese Erfassung kann auf Umgebungssensoren oder satellitengestützten Ortungssystemen basieren.

Die Steuereinheit kann ferner eingerichtet sein, um die Gutleitklappe in eine Zielstellung zu bewegen, während die Hilfsklappe sich in der Überbrückungsstellung befindet, und bei Erreichen der Zielstellung die Hilfsklappe in die Normalstellung zu versetzen. Die Zielstellung sollte so gewählt sein, dass in ihr der von der Gutleitklappe gelenkte Gutstrom in den alternativen Auffangbehälter trifft.

Ein Signal, das von der Steuereinheit erzeugt wird, wenn in Normalstellung der Hilfsklappe die Gutleitklappe sich außerhalb eines Ausgangsstellungsbereichs befindet, kann genutzt werden, um einen Befehl des Fahrers zur Umstellung auf einen alternativen Auffangbehälter zu unterdrücken, wenn fraglich ist, ob in der gegenwärtigen relativen Position von Überladevorrichtung und erstem Auffangbehälter die Gutleitklappe überhaupt weit genug verstellt werden kann, um einen alternativen Auffangbehälter zu treffen, oder um den Fahrer der Erntemaschine oder des Transportfahrzeugs auf die Notwendigkeit einer Korrektur der relativen Position vor einem Umschalten hinzuweisen.

Gegenstand der Erfindung ist ferner eine Erntemaschine, insbesondere ein Feldhäcksler, mit einer Überladevorrichtung wie oben beschrieben.

Die Aufgabe wird einem anderen Aspekt der Erfindung zufolge gelöst durch ein Verfahren zum Betreiben einer Überladevorrichtung, insbesondere einer Überladevorrichtung an einer Erntemaschine, wobei die Überladevorrichtung einen sich zwischen einem Einlass und einem Auslass erstreckenden Auswurfkrümmer, eine an dem Auslass angeordnete Gutleitklappe umfasst, deren Stellung relativ zum Auswurfkrümmer steuerbar ist, um einen am Auslass des Auswurfkrümmers austretenden Gutstrom in eine gewünschte Richtung zu lenken, und eine Hilfsklappe umfasst, die an einer stromaufwärts vom Auslass gelegenen Ausleitöffnung angeordnet und zwischen einer Normalstellung, in der sie die Ausleitöffnung verschließt, und einer Überbrückungsstellung bewegbar ist, in der die Ausleitöffnung offen und der Weg des Gutstroms zum Auslass versperrt ist, mit den Schritten:
- Einspeisen eines Gutstroms in den Einlass und Ausgeben des Gutstroms über den Auslass, wobei die Gutleitklappe ausgerichtet ist, um den Gutstrom in einen ersten Auffangbehälter zu leiten;
- Platzieren eines zweiten Auffangbehälters in Reichweite der Überladevorrichtung;
- wenn einer der Auffangbehälter so platziert ist, dass er bei in der Überbrückungsstellung befindlicher Hilfsklappe vom Gutstrom getroffen würde, Umstellen der Hilfsklappe in die Überbrückungsstellung;
- während die Hilfsklappe in der Überbrückungsstellung ist, Ausrichten der Gutleitklappe auf den zweiten Auffangbehälter; und
- Entfernen des ersten Auffangbehälters.

Das Navigieren von Erntemaschine und Transportfahrzeugen ist einfacher, wenn der Auffangbehälter, der in der Überbrückungsstellung vom Gutstrom getroffen wird, der erste Auffangbehälter ist. Dies erlaubt es dem zweiten Transportfahrzeug, sich der Anordnung von Erntemaschine und erstem Transportfahrzeug allmählich von der Seite zu nähern, wohingegen das erste Transportfahrzeug die Anordnung einfach und sicher verlassen kann, indem es langsamer fährt als die Erntemaschine und das zweite Transportfahrzeug.

Die dann resultierende Lücke zwischen Erntemaschine und zweitem Transportfahrzeug kann geschlossen werden durch Verlagern des zweiten Auffangbehälters an die vom ersten Auffangbehälter freigemachte Position unter kontinuierlicher Anpassung der Stellung der Gutleitklappe.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Feldhäcksler sowie schematische Schnitte durch einen Auswurfkrümmer des Feldhäckslers;
- Fig. 2a-e: den Feldhäcksler und Transportfahrzeuge im Einsatz;
- Fig. 3: ein Blockdiagramm der Steuerung von Feldhäcksler und Transportfahrzeugen; und
- Fig. 4: ein Flussdiagramm eines Arbeitsverfahrens der Steuereinheit des Feldhäckslers.

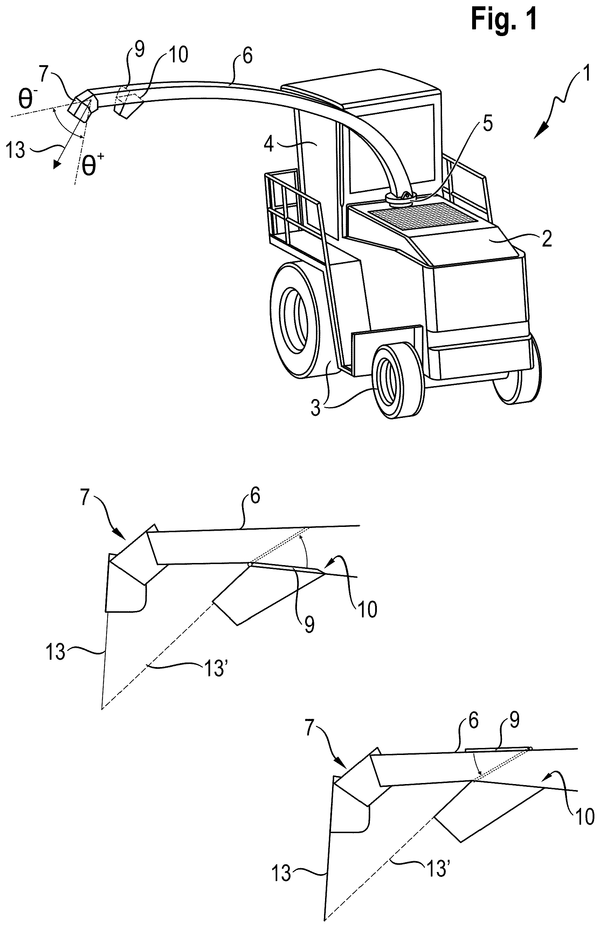

Fig. 1 zeigt einen erfindungsgemäßen Feldhäcksler 1 in perspektivischer Ansicht schräg von hinten. Ein Maschinengehäuse 2 des Feldhäckslers 1 enthält einen Motor zum Antreiben der Räder 3 sowie eines in der Fig. nicht dargestellten, an einer Vorderseite des Feldhäckslers 1 montierbaren Erntevorsatzes. Mit Hilfe des Erntevorsatzes vom Boden aufgenommenes Erntegut wird in einer in der Fig. nicht sichtbaren, im Innern des Maschinenge-häuses 2 unterhalb einer Fahrerkabine 4 angeordneten Häckseltrommel zerkleinert und in einen hinter der Fahrerkabine 4 aufsteigenden Auswurf-schacht ausgegeben. Ein ebenfalls an dem Auswurfschacht im Innern des Gehäuses 2 angeordneter Nachbeschleuniger schleudert das gehäckselte Erntegut durch einen auf einem Drehkranz 5 an der Oberseite des Maschinengehäuses 2 um eine vertikale Achse drehbar montierten Auswurfkrümmer 6.

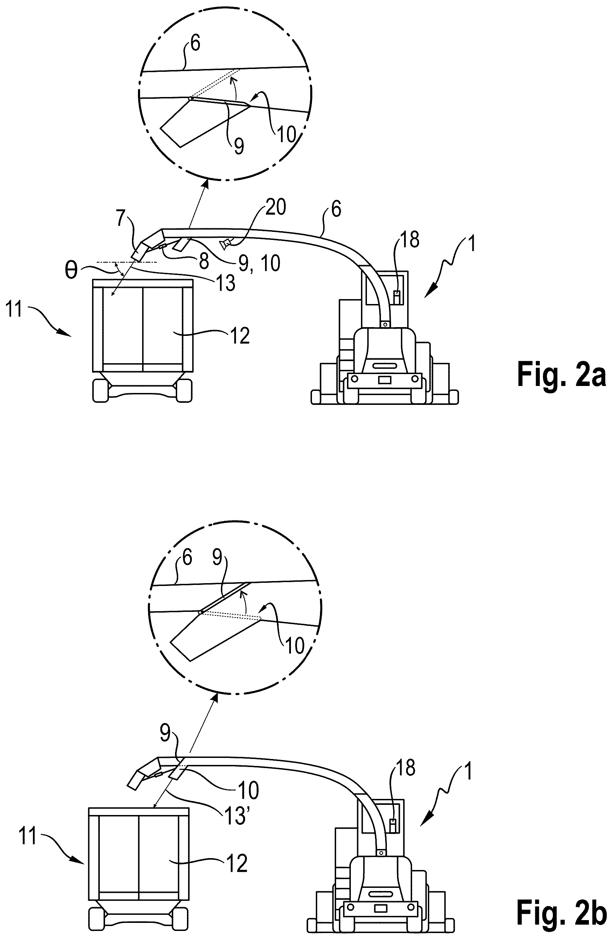

Am distalen Ende des Auswurfkrümmers 6 befindet sich eine Gutleitklappe 7, die, um eine horizontale Achse schwenkbar, die Neigung bestimmt, mit der sich ein Strom 13 des gehäckselten Ernteguts nach Verlassen des Auswurfkrümmers 6 weiterbewegt. Die Gutleitklappe 7 ist durch ein Stellglied 8 (s. Fig. 2a) kontinuierlich einstellbar, so dass die Neigung des Stroms 13 zwischen durch die Bewegungsfreiheit der Gutleitklappe 7 vorgegebenen Grenzen θ⁺, θ⁻ frei wählbar ist.

Kurz vor dem distalen Ende ist am Auswurfkrümmer 6 eine Hilfsklappe 9 angeordnet. Die Hilfsklappe 9 ist zwischen einer Normalstellung, in der sie den Strom des Ernteguts durch den Auswurfkrümmer 6 zur Gutleitklappe 7 nicht beeinflusst, und einer Überbrückungsstellung verstellbar, in der sie dem Erntegut den Weg zur Gutleitklappe 7 versperrt und es zwingt, den Auswurfkrümmer 6 an einer stromaufwärts von der Gutleitklappe 7 gelegenen Ausleitstelle 10 zu verlassen.

Fig. 1 zeigt in ihrem unteren Teil schematische Schnitte durch das freie Ende des Auswurfkrümmers 6 mit zwei verschiedenen Ausgestaltungen der Hilfsklappe 9. Der ersten Ausgestaltung zufolge ist die Hilfsklappe 9 in der Normalstellung bündig mit einer Unterseite des Auswurfkrümmers 6, der Gutstrom verläuft über der Hilfsklappe 9 her zur Gutleitklappe 7 und tritt an dieser als Gutstrom 13 aus. Die Hilfsklappe 9 ist um eine an ihrer stromabwärtigen Kante verlaufende Achse in die gestrichelt dargestellte Überbrückungsstellung schwenkbar; in der der Strom des Ernteguts auf sie trifft, an ihr schräg nach unten zur Ausleitstelle 10 abgelenkt wird und den Auswurfkrümmer 6 als Gutstrom 13' verlässt.

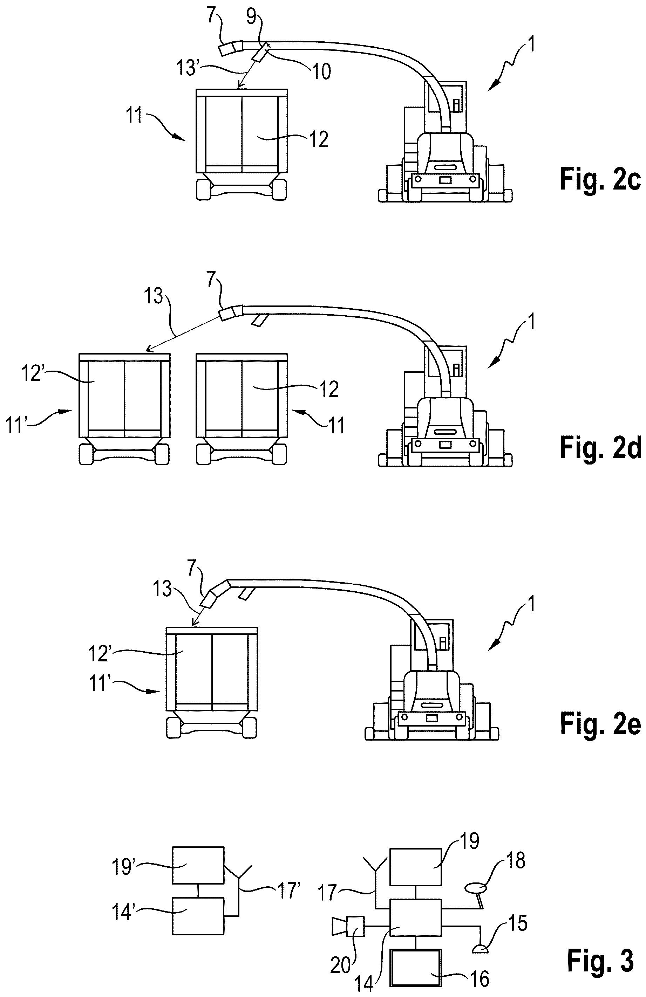

Ein in der Fig. an der Ausleitstelle 13 gezeigter Rohrstutzen ist zum Ausrichten des Gutstroms 13' nicht unbedingt erforderlich; er ist in der nachfolgenden Fig. 2 im Wesentlichen nur dargestellt, um die Position der Ausleitstelle 10 klar erkennbar zu machen.

In der zweiten Ausgestaltung der Fig.1 liegt die Hilfsklappe 9 in ihrer Normalstellung an einer oberen Wand des Auswurfkrümmers 6 an. In der oberen Wand kann eine Ausbuchtung geformt sein, die die Hilfsklappe 9 in der Normalstellung aufnimmt, so dass ihre dem im Auswurfkrümmer 6 zirkulierenden Gutstrom zugewandte Unterseite bündig ist mit stromauf- oder abwärts angrenzenden Innenflächen der oberen Wand, und das Erntegut sich nicht an vorstehenden Kanten der Hilfsklappe 9 oder der oberen Wand verfangen kann. Die Hilfsklappe ist hier um eine an ihrer stromaufwärtigen Kante verlaufende Achse schwenkbar, die durch Schwenken um diese Achse erreichbare Überbrückungsstellung entspricht derjenigen der ersten Ausgestaltung; indem die stromabwärtige Kante der Hilfsklappe 9 an den Stutzen anschließt, wird das Erntegut über den Stutzen als Strom 13' ausgeleitet.

Um das Erntegut aus dem Auswurfkrümmer auszuleiten, wird der Stutzen nicht benötigt. Wenn er fehlt, bestimmt allein die Orientierung der Hilfsklappe die Richtung des ausgeleiteten Stroms 13'; so dass es vorteilhafterweise möglich wird, die Ausrichtung des Stroms 13' durch Verstellen der Hilfsklappe 9 zu variieren.

Fig. 2a zeigt in einer Ansicht von hinten den Feldhäcksler 1 und ein Transportfahrzeug 11 mit einem Auffangbehälter 12 für Erntegut. Die Hilfsklappe 9 befindet sich in Normalstellung, bündig mit der Unterseite des Auswurfkrümmers 6, und versperrt die Ausleitstelle 10, so dass das Erntegut über die Gutleitklappe 7 als Strom 13 ausgegeben wird. Eine Detailvergrößerung zeigt die Hilfsklappe 9 gemäß der oben erläuterten ersten Ausgestaltung; es versteht sich, dass der im Folgenden anhand von Fig. 2 beschriebene Ablauf auch mit der Hilfsklappe 9 gemäß der zweiten Ausgestaltung realisierbar ist.

Damit der Auffangbehälter 12 das Erntegut kontinuierlich und im Wesentlichen verlustfrei aufnehmen kann, müssen der Feldhäcksler 1 und das Transportfahrzeug 11 im Feldeinsatz unter Einhaltung eines geeigneten Abstands nebeneinander herfahren. Der Abstand kann sowohl in Fahrtrichtung als auch quer dazu in Grenzen variiert werden, um eine gleichmäßige Verteilung des Ernteguts über die Grundfläche des Auffangbehälters 12 zu erreichen; auch Schwenkbewegungen des Auswurfkrümmers 6 um die vertikale Achse sowie geringfügige Verstellungen der Gutleitklappe 7 können diese gleichmäßige Verteilung unterstützen.

Zum Überwachen und ggf. Anpassen des Abstandes können Steuereinheiten 14, 14' (s. Fig. 3) des Feldhäckslers 1 und des Transportfahrzeugs 11 jeweils mit Satellitennavigationssystemen 19,19' verbunden sein, von denen sie Informationen zur geographischen Position von Feldhäcksler 1 und Transportfahrzeugs 11 beziehen und über Funkschnittstellen 17, 17' untereinander austauschen können, um die relative Position beider zueinander zu ermitteln; alternativ oder ergänzend ist eine Kamera 20 oder ein anderer Umgebungssensor am Feldhäcksler 1 vorgesehen, der es dessen Steuereinheit ermöglicht, das Transportfahrzeug 11 zu identifizieren und seinen Abstand abzuschätzen.

Die Steuereinheit 14 des Feldhäckslers 1 ist mit einem Eingabeelement, vorzugsweise einer Taste an einem vom Fahrer des Feldhäckslers 1 zu betätigenden Steuerknüppel 18, verbunden, über das der Fahrer einen Befehl zum Steuern eines Austauschs des Auffangbehälters 12 oder, während ein solcher Austausch stattfindet, einen Befehl zum Verstellen der Hilfsklappe 9 zwischen Normal- und Überbrückungsstellung erteilen kann.

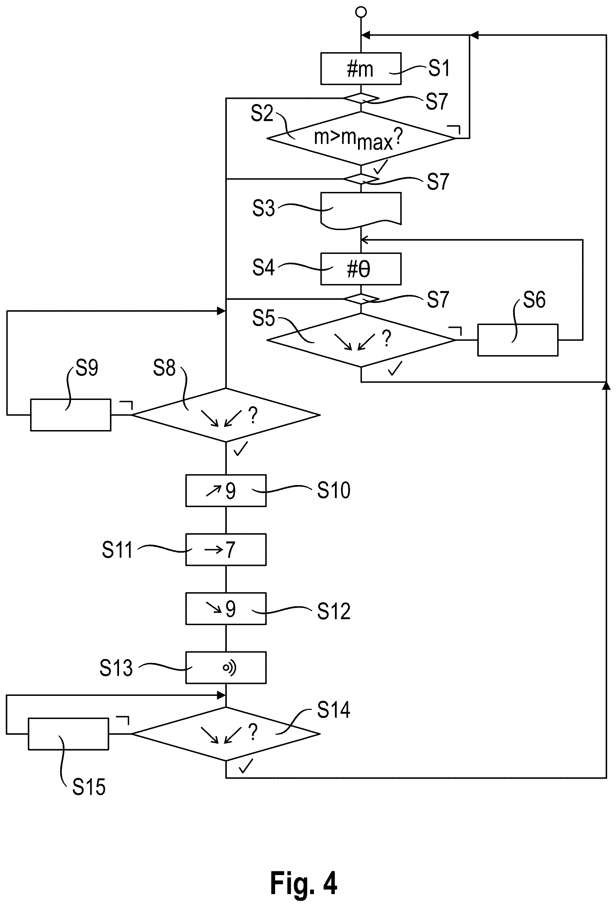

Die Steuereinheit 14 ist ferner mit Gutflusssensoren 15 verbunden, die am Weg des Ernteguts durch das Maschinengehäuse 2 angeordnet sind, und überwacht die seit Beginn des Beladens des Auffangbehälters 12 dorthin übergeladene Menge m des Ernteguts, wie in Fig. 4 als Schritt S1 dargestellt. Wenn in Schritt S2 festgestellt wird, dass die Menge m einen Schwellwert mₘₐₓ überschreitet, der etwas kleiner als die Ladekapazität des Auffangbehälters 12 gewählt ist, also eine gewisse Zeit bevor diese Ladekapazität erschöpft ist, erzeugt die Steuereinheit 14 in Schritt S3 ein Signal, das auf einem Anzeigeinstrument 16 des Feldhäckslers 1 dargestellt werden kann, um dessen Fahrer auf den alsbald nötigen Austausch des Auffangbehälters 12 hinzuweisen und ihn zu veranlassen, ein Transportfahrzeug mit einem weiteren Auffangbehälter anzufordern. Das Signal kann auch von der Steuereinheit 14 unmittelbar über eine Funkschnittstelle 17 des Feldhäckslers 1 ausgestrahlt werden, um solch ein Transportfahrzeug herbeizurufen.

In Schritt S4 fragt die Steuereinheit 14 die Stellung des Stellglieds 8 ab, um die Orientierung der Gutleitklappe 7 zu ermitteln und daraus die Neigung θ des an der Gutleitklappe austretenden Gutstroms 13 gegen die Horizontale abzuleiten. Eine Neigung 0', unter der stattdessen ein Gutstrom 13' an der Ausleitstelle 10 austreten würde, wenn sich die Hilfsklappe 9 in der Überbrückungsstellung befände, ist vorgegeben durch die Orientierung, die die Hilfsklappe 9 in der Überbrückungsstellung annimmt. Die Steuereinheit 14 überprüft anhand der Neigungen θ, θ' in S5, ob der aktuell ausgegebene Gutstrom 13 und ein eventuell über die Hilfsklappe 9 abgeleiteter Gutstrom 13' im Auffangbehälter 12 aufeinandertreffen würden.

Wenn in S5 festgestellt wird, dass die Gutströme 13, 13' nicht aufeinandertreffen würden, ist nicht gewährleistet, dass der Gutstrom 13' den Auffangbehälter 12 erreichen würde. In diesem Fall wird so lange ein Befehl, den Abstand zum Feldhäcksler 1 anzupassen (typischerweise, ihn zu verringern) an das Transportfahrzeug 11 ausgegeben (S6), und die Orientierung der Gutleitklappe 7 wird dem veränderten Abstand angepasst (S6), bis eine erneute Prüfung (S5) ergibt, dass nun tatsächlich die Gutströme 13, 13' aufeinandertreffen würden.

Auf diese Weise wird sichergestellt, dass sich vor einem Austausch des Auffangbehälters 12 die Gutleitklappe 7 in einem hierfür geeigneten Ausgangsstellungsbereich befindet.

Im Laufe der Schritte S1-S6 kann jederzeit überprüft werden, ob der Fahrer einen Befehl zum Austausch des Auffangbehälters 12 gegeben hat (S7). Wenn ja, dann wird wieder geprüft (S8), ob die Gutströme 13, 13' ' im Auffangbehälter 12 aufeinandertreffen würden.

Tun sie dies nicht, so erzeugt die Steuereinheit 14 ein Hinweissignal (S9), das dem Fahrer akustisch und/oder optisch auf dem Anzeigeinstrument 16 zur Kenntnis gebracht werden kann, um ihn darauf hinzuweisen, dass in der gegenwärtigen Position von Feldhäcksler 1 und Transportfahrzeug 11 zueinander ein Wechsel des Auffangbehälters nicht möglich ist. Das Hinweissignal wird ferner an das Transportfahrzeug 11 übertragen, um dieses wie in Schritt S6 zu einer Korrektur seines Abstands vom Feldhäcksler 1 zu veranlassen. Der vom Fahrer erteilte Umschaltbefehl kann anschließend verworfen werden, so dass der Fahrer einen neuen Befehl geben kann, sobald das Hinweissignal nicht mehr angezeigt wird; er kann auch gespeichert bleiben, um befolgt zu werden, sobald Feldhäcksler 1 und Transportfahrzeug 11 einen geeigneten Abstand erreicht haben.

Wenn in Schritt S8 festgestellt wird, dass Feldhäcksler 1 und Transportfahrzeug 11 einen geeigneten Abstand haben, versetzt die Steuereinheit 14 die Hilfsklappe 9 in die Überbrückungsstellung, um wie in Fig. 2b gezeigt den Gutstrom 13 zu unterbrechen und stattdessen den Gutstrom 13' über die Ausleitstelle 10 in den Auffangbehälter 12 auszugeben (S10).

Die Gutleitklappe 7 wird nun (S11) hochgeschwenkt in eine Zielstellung, in der sie den Gutstrom 13 mit so weit verringerter Neigung θ ausgibt, dass er über den Auffangbehälter 12 hinwegfliegen würde, wenn er nicht durch die Hilfsklappe 9 blockiert wäre, siehe Fig. 2c.

Sobald die Steuereinheit 14 erkennt, dass das in Schritt S3 angeforderte Transportfahrzeug 11' seinen Auffangbehälter 12' passend neben dem nahezu vollen Auffangbehälter 12 positioniert hat, bewegt sie die Hilfsklappe 9 wieder in die Normalstellung zurück (S12). Daraufhin trifft der Gutstrom 13 in den neuen Auffangbehälter 12', wie in Fig. 2d gezeigt, und der Wert m wird auf Null zurückgesetzt, um anschließend den Füllstand des Auffangbehälters 12' überwachen zu können.

Die Steuereinheit 14 sendet nun über die Funkschnittstelle 17 eine Nachricht an das Transportfahrzeug 11, dass der Gutstrom 13 zum Transportfahrzeug 11' verlagert worden ist (S13). Das Transportfahrzeug 11 reduziert daraufhin seine Geschwindigkeit, um den Platz zwischen dem Transportfahrzeug 11' und dem Feldhäcksler 1 freizumachen.

Die Gutleitklappe 7 befindet sich nun in einer Stellung, in der eine erneute Verlagerung des Gutstroms 13 auf ein weiteres Transportfahrzeug in der oben beschriebenen Weise nicht möglich ist, da ein Umschalten der Hilfsklappe 9 in die Überbrückungsstellung dazu führen würde, dass diese den Gutstrom 13' neben den Auffangbehälter 12' fallen lässt. Außerdem begünstigt ein horizontaler Versatz der Gutleitklappe 7 gegen den Auffangbehälter 12' wie in Fig. 2d gezeigt Erntegutverluste. Um das das Transportfahrzeug 11' zu veranlassen, näher an den Feldhäcksler 1 heranzurücken, idealerweise bis sich wie in Fig. 2e die Gutleitklappe 7 und die Hilfsklappe 9 über dem Auffangbehälter 12' befinden, können sich analog zu den Schritten S8 und S9 eine Prüfung S14, ob die Gutströme 13, 13' ' im Auffangbehälter 12' aufeinandertreffen würden, und falls nein, die Aussendung S15 des Hinweissignals an das Transportfahrzeug 11 anschließen.

Der Vollständigkeit halber sollte angemerkt sein, dass der Wechsel von einem Auffangbehälter zu einem anderen auch in umgekehrter Reihenfolge ablaufen kann: während der Gutstrom 13 zunächst an der Gutleitklappe ausgegeben wird, wird zunächst dafür gesorgt, dass an einer Stelle, an der der von der Hilfsklappe ausgeleitete Gutstrom 13' auftreffen würde, Platz für einen neuen Auffangbehälter12' ist. Nachdem dieser an dem freien Platz positioniert worden ist, wird die Hilfsklappe in die Überbrückungsstellung geschaltet, und das Befüllen des neuen Auffangbehälters 12' beginnt. Währenddessen wird die Gutleitklappe 7 in eine Stellung geschwenkt, in der ihr Gutstrom 13 ebenfalls den neuen Auffangbehälter12' treffen würde, und sobald diese erreicht ist, kann die Hilfsklappe in die Normalstellung zurückversetzt werden.

### Bezugszeichen

- 1: Feldhäcksler
- 2: Maschinengehäuse
- 3: Rad
- 4: Fahrerkabine
- 5: Drehkranz
- 6: Auswurfkrümmer
- 7: Gutleitklappe
- 8: Stellglied
- 9: Hilfsklappe
- 10: Ausleitstelle
- 11: Transportfahrzeug
- 12: Auffangbehälter
- 13: Strom
- 14: Steuereinheit
- 15: Gutflusssensor
- 16: Anzeigeinstrument
- 17: Funkschnittstelle
- 18: Steuerknüppel
- 19: Satellitennavigationssystem
- 20: Kamera

## Patentansprüche

1. Überladevorrichtung mit einem sich zwischen einem Einlass (5) und einem Auslass erstreckenden Auswurfkrümmer (6) und einer an dem Auslass angeordneten Gutleitklappe (7), deren Stellung relativ zum Auswurfkrümmer (6) steuerbar ist, um einen am Auslass des Auswurfkrümmers (6) austretenden Gutstrom (13) in eine gewünschte Richtung zu lenken, **dadurch gekennzeichnet, dass** eine am Auswurfkrümmer (6) stromaufwärts vom Auslass gelegene Hilfsklappe (9) zwischen einer Normalstellung, in der sie den Gutstrom zum Auslass passieren lässt, und einer Überbrückungsstellung bewegbar ist, in der der Weg des Gutstroms zum Auslass versperrt ist und der Gutstrom an einer stromaufwärts vom Auslass gelegenen Ausleitstelle (10) aus dem Auswurfkrümmer (6) austritt.

2. Überladevorrichtung nach Anspruch 1, bei dem die Gutleitklappe (7) in eine Ausgangsstellung steuerbar ist, in der die Wege eines bei in Normalstellung befindlicher Hilfsklappe (9) am Auslass austretenden Gutstroms (13) und eines Gutstroms (13'), der bei in Überbrückungsstellung befindlicher Hilfsklappe (9) an der Ausleitöffnung (10) austritt, entfernt von dem Auslass und der Ausleitöffnung aufeinandertreffen.

3. Überladevorrichtung nach Anspruch 1 oder 2, bei der der Abstand zwischen der Ausleitöffnung (10) und dem Einlass (5) wenigstens doppelt so groß ist wie der Abstand zwischen der Ausleitöffnung (10) und dem Auslass.

4. Überladevorrichtung nach einem der vorhergehenden Ansprüche, bei der die Hilfsklappe (9) um eine an einer Oberseite des Auswurfkrümmers (6) verlaufende Achse zwischen der Normalstellung und der Überbrückungsstellung schwenkbar ist.

5. Überladevorrichtung nach einem der vorhergehenden Ansprüche, ferner mit einer Steuereinheit (14) zum Steuern der Stellungen von Gutleitklappe (7) und Hilfsklappe (9), wobei die Steuereinheit (14) eingerichtet ist, einen Übergang der Hilfsklappe (9) von der Normalstellung in die Überbrückungsstellung nur zuzulassen, wenn die Gutleitklappe (7) sich in einem vorgegebenen Ausgangsstellungsbereich befindet.

6. Überladevorrichtung nach Anspruch 5, bei der die Steuereinheit (14) eingerichtet ist, ein Hinweissignal zu erzeugen (S9), wenn die Gutleitklappe (7) sich nicht in dem Ausgangsstellungsbereich befindet, und optional eingerichtet ist, eine durch den Auswurfkrümmer (6) geförderte Gutmenge (m) zu überwachen (S1) und das Hinweissignal erst dann zu erzeugen (S3), wenn die Gutmenge (m) einen Schwellenwert (mₘₐₓ) erreicht hat (S2).

7. Überladevorrichtung nach Anspruch 5 oder 6, bei der die Steuereinheit (14) eingerichtet ist, die Position eines aktiven Auffangbehälters (12) relativ zum Auswurfkrümmer (6) zu ermitteln und die Stellung der Gutleitklappe (7) der ermittelten Position nachzuführen.

8. Überladevorrichtung nach einem der Ansprüche 5 bis 7, bei der die Steuereinheit (14) eingerichtet ist, zu erfassen, ob sich ein alternativer Auffangbehälter (12') an einer Position befindet, die für den Gutstrom (13) erreichbar ist, wenn die Gutleitklappe (7) sich in einer Zielstellung befindet, und den Übergang der Hilfsklappe (9) von der Überbrückungsstellung in die Normalstellung nur zuzulassen, wenn erfasst wird, dass der alternativen Auffangbehälter sich an der Position befindet (S12).

9. Überladevorrichtung nach einem der vorhergehenden Ansprüche, ferner mit einer Steuereinheit (14), die eingerichtet ist, die Gutleitklappe (7) in eine Zielstellung zu bewegen, während die Hilfsklappe (9) sich in der Überbrückungsstellung befindet, und bei Erreichen der Zielstellung die Hilfsklappe in die Normalstellung zu versetzen (S12).

10. Überladevorrichtung nach Anspruch 9, bei dem die Steuereinheit (14) eingerichtet ist, ein Signal zu erzeugen (S3), wenn in Normalstellung der Hilfsklappe (9) die Gutleitklappe (7) sich außerhalb eines Ausgangsstellungsbereichs befindet.

11. Erntemaschine, insbesondere Feldhäcksler (1), mit einer Überladevorrichtung nach einem der vorhergehenden Ansprüche.

12. Verfahren zum Betreiben einer Überladevorrichtung, insbesondere an einer Erntemaschine, wobei die Überladevorrichtung einen sich zwischen einem Einlass und einem Auslass erstreckenden Auswurfkrümmer (6), eine an dem Auslass angeordnete Gutleitklappe (7), deren Stellung relativ zum Auswurfkrümmer (6) steuerbar ist, um einen am Auslass des Auswurfkrümmers (6) austretenden Gutstrom (13) in eine gewünschte Richtung zu lenken, und eine stromaufwärts vom Auslass gelegene Hilfsklappe (9) umfasst, die zwischen einer Normalstellung, in der sie den Gutstrom zum Auslass passieren lässt, und einer Überbrückungsstellung bewegbar ist, in der der Weg des Gutstroms zum Auslass versperrt ist und der Gutstrom an einer stromaufwärts vom Auslass gelegenen Ausleitstelle aus dem Auswurfkrümmer austritt, mit den Schritten:
- Einspeisen eines Gutstroms in den Einlass und Ausgeben des Gutstroms (13) über den Auslass, wobei die Gutleitklappe (7) ausgerichtet ist, um den Gutstrom (13) in einen ersten Auffangbehälter (12) zu leiten;
- Platzieren eines zweiten Auffangbehälters (12') in Reichweite der Überladevorrichtung;
- wenn einer (12') der Auffangbehälter so platziert ist, dass er bei in der Überbrückungsstellung befindlicher Hilfsklappe (9) vom Gutstrom (13') getroffen würde, Umstellen der Hilfsklappe (9) in die Überbrückungsstellung;
- während die Hilfsklappe (9) in der Überbrückungsstellung ist, Ausrichten der Gutleitklappe (7) auf den zweiten Auffangbehälter (12');
- wenn die Gutleitklappe (7) auf den zweiten Auffangbehälter (12') ausgerichtet ist, Umstellen der Hilfsklappe (9) in die Normalstellung, und Entfernen des ersten Auffangbehälters (12).

13. Verfahren nach Anspruch 11, bei dem der Auffangbehälter, der in der Überbrückungsstellung vom Gutstrom (13') getroffen wird, der erste Auffangbehälter (12) ist.

14. Verfahren nach Anspruch 11 oder 12 mit dem Schritt
- Verlagern des zweiten Auffangbehälters (12') an die vom ersten Auffangbehälter (12) freigemachte Position unter kontinuierlicher Anpassung der Stellung der Gutleitklappe (7).
